# EUROPÄISCHE PATENTSCHRIFT

(11) **EP 1 746 329 B1**
(45) Veröffentlichungstag und Bekanntmachung des Hinweises auf die Patenterteilung: **23.11.2011**
(21) Anmeldenummer: 06012888.1
(22) Anmeldetag: 22.06.2006
(51) Int. Cl.: F16L 37/091

(54) **Steckfitting**
Plug-in connector
Connecteur enfichable

(30) Priorität: 21.07.2005 DE 102005034181
(43) Veröffentlichungstag der Anmeldung: 24.01.2007
(73) Patentinhaber: Poloplast GmbH & Co. KG, 4060 Leonding (AT)
(72) Erfinder: Miethlinger, Jürgen, Dr., 4851 Gampern (AT); Mayrbäurl, Erwin, Dipl.-Ing., 4481 Asten (AT)
(74) Vertreter: Weber, Joachim

(56) Entgegenhaltungen:
- JP-A- 2001 208 266
- JP-A- 2003 106 490
- JP-A- 2003 314 776
- US-A- 4 431 216

## Beschreibung

Die Erfindung bezieht sich auf einen Steckfitting gemäß den Merkmalen des Oberbegriffs des Anspruchs 1. Ein solcher Steckfitting ist in der JP 2003 314 776 A offenbart.

Im Einzelnen bezieht sich die Erfindung auf einen Steckfitting mit einem Rohrstutzen, auf welchen ein Rohr oder eine Rohrleitung aufschiebbar ist, welche an dem Steckfitting sicher fixiert und abgedichtet wird.

Der erfindungsgemäße Steckfitting ist insbesondere für flexible Rohrleitungen aus PE-RT für heiße oder kalte Medien einsetzbar. Die Rohrleitungen könnten auch aus PB oder PEX gefertigt sein.

Steckfittinge der eingangs genannten Art sind aus dem Stand der Technik in unterschiedlichsten Ausgestaltungsvarianten vorbekannt, welche sich insbesondere hinsichtlich der Halterung, Klemmung und Fixierung der Rohrenden und hinsichtlich der Bedienbarkeit unterscheiden. Dabei spielt es eine wichtige Rolle, die Steckfittinge so auszubilden, dass diese Fehlmontagen auszuschließen und betriebssicher einsetzbar sind.

Der Erfindung liegt die Aufgabe zugrunde, einen Steckfitting der Eingangs genannten Art zu schaffen, welcher bei einfachem Aufbau und einfacher, kostengünstiger Herstellbarkeit ein hohes Maß an Betriebssicherheit aufweist und dabei die Nachteile des Standes der Technik vermeidet.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass in dem Ringraum, in welchen das Rohrende eingeschoben wird, axial verschiebbar ein Sicherungselement angeordnet ist, welches die Rastvorrichtung in dem nicht-montierten Zustand des Rohres vorspannt. Es ist somit möglich, das Rohrende oder Rohrleitungsende auf besonders einfache Weise zu montieren. Bei Erreichen einer vorgegebenen Aufstecklänge auf den Rohrstutzen wird das Sicherungselement von dem Rohr in axialer Richtung verschoben. Hierdurch wird die zuvor von dem Sicherungselement gesicherte und vorgespannte Rastvorrichtung freigegeben, so dass diese sich mit der Oberfläche des Rohrs verkrallen und dieses sichern kann. Somit ist sichergestellt, dass die Rastvorrichtung, welche bevorzugterweise ringförmig ausgestaltet ist und mehrere Rastzähne aufweist, fest mit dem Rohrende verankert wird. Hierdurch ergibt sich ein hohes Maß an Betriebssicherheit.

Ein weiterer, vorteilhafter Aspekt der Erfindung ist dadurch gegeben, dass die Rastvorrichtung in günstiger Ausgestaltung ein akustisches Signal gibt, wenn sie freigegeben wird und ihre Rastzähne gegen die Oberfläche des Rohres schlagen. Dieses akustische Signal kann als Klickgeräusch wahrgenommen werden, so dass bei der Montage des Steckfittings eindeutig identifiziert werden kann, wann dieser ausreichend weit auf das Rohrende aufgeschoben und mit diesem verkrallt ist.

Durch eine günstige Ausgestaltung der Rastvorrichtung kann eine ausreichende Aufschlagenergie bereitgestellt werden, die bei dem Ausklinken der Rastvorrichtung zu einer sicheren Verkrallung der Rastzähne mit der Oberfläche des Rohres führt. Die Rastvorrichtung kann beispielsweise als Metallprägeteil hergestellt sein.

Um eine sichere und selbstdichtende Montage des Rohres an dem Steckfitting zu ermöglichen, ist es besonders günstig, wenn der Rohrstutzen zumindest zum Teil konusförmig ausgebildet ist. Hierdurch wird das aus einem flexiblen Material bestehende Rohr aufgeweitet, so dass der Strömungsquerschnitt durch den Steckfitting weitestgehend erhalten bleibt. Zugleich ergibt die auftretende Flächenpressung zu einem am Rohrstutzen ausgebildeten Wulstbereich eine ausreichende Dichtwirkung, so dass auf zusätzliche Dichtmittel gegebenenfalls verzichtet werden kann. Hierdurch vereinfacht sich die Montage. Auch die Herstellungskosten können hierdurch gesenkt werden.

Das Aufschieben des Rohrendes auf den Rohrstutzen wird bevorzugterweise dadurch erleichtert, dass dieser an seinem vorderen Bereich mit einem wendelartigen Führungskamm oder Wulst oder einem gewindeartigen Bereich versehen ist. Somit kann das Rohrende auf den Rohrstutzen durch eine Drehbewegung montiert werden. Starke Axialkräfte sind hierfür nicht erforderlich. Dieser Vorgang wird Erfindungsgemäß dadurch für den Monteur erleichtert, dass der Grundkörper mit einer Außenhülse versehen ist, welche zunächst im nicht-montierten Zustand drehfest mit dem Grundkörper verbunden ist. Die Außenhülse kann somit mit der Hand gegriffen und auf das Rohrende (zusammen mit dem restlichen Steckfitting) aufgeschraubt werden. Erfindungsgemäß ist die Außenhülse so ausgebildet, dass sie durch das Sicherungselement drehfest gekoppelt ist. Bei einer erfolgreichen Montage des Rohrendes und der dadurch erfolgenden Freigabe des Sicherungselementes durch dessen Verschiebung in Axialrichtung wird somit auch die Außenhülse entkoppelt, so dass diese nachfolgend relativ zu dem Grundkörper drehbar ist. Eine weitere Verdrehung der Außenhülse kann somit auch nicht zu einem unbeabsichtigten Lösen des Steckfittings führen. Auch unter Zugbelastung ist das Rohr mit der Außenhülse frei drehbar.

Erfindungsgemäß ist es vorteilhaft, wenn der Rohrstutzen an seinem vorderen Bereich (oder auch in einem mittleren Bereich) mit zumindest einer radial umlaufenden Wulst versehen ist, die zu einem zusätzlichen Klemmen und Dichten des Rohres führt. Die Wulst kann zusätzlich zu dem gewindeartigen Bereich (wendelförmige Wulst) vorgesehen sein.

Weiterhin kann es vorteilhaft sein, wenn die Außenhülse und/oder der Zwischenring und/oder der Lagerungsring mit zumindest einem Sichtfenster versehen sind. Durch dieses Sichtfenster ist es möglich, die Verschiebung des Sicherungselementes auch optisch zu kontrollieren. Hierfür ist es besonders vorteilhaft, wenn das Sicherungselement farblich hervorgehoben ist, beispielsweise in einer Signalfarbe.

Im Folgenden wird die Erfindung anhand von Ausführungsbeispielen in Verbindung mit der Zeichnung beschrieben. Dabei zeigt:
- Fig. 1: einen axialen Längsschnitt, teils perspektivisch, eines Ausführungsbeispiels des erfindungsgemäßen Steckfittings im montagebereiten, noch nicht montierten Zustand,
- Fig. 2: eine Schnittansicht analog Fig. 1 im fertigmontierten Zustand eines Rohres,

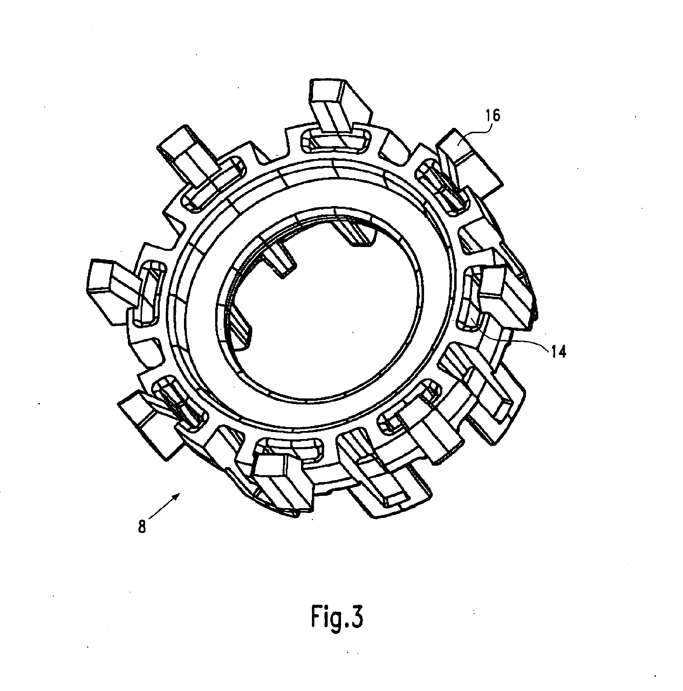

- Fig. 3: eine perspektivische Ansicht des erfindungsgemäßen Sicherungselements, und
- Fig. 4: eine perspektivische Ansicht der erfindungsgemäßen Rastvorrichtung.

In den Ausführungsbeispielen werden gleiche Teile mit gleichen Bezugsziffern versehen.

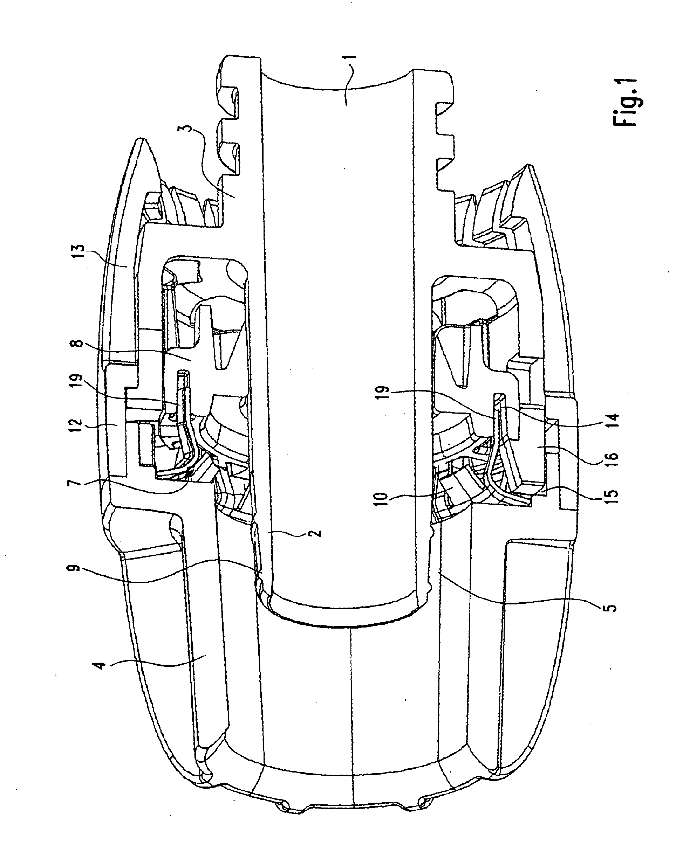

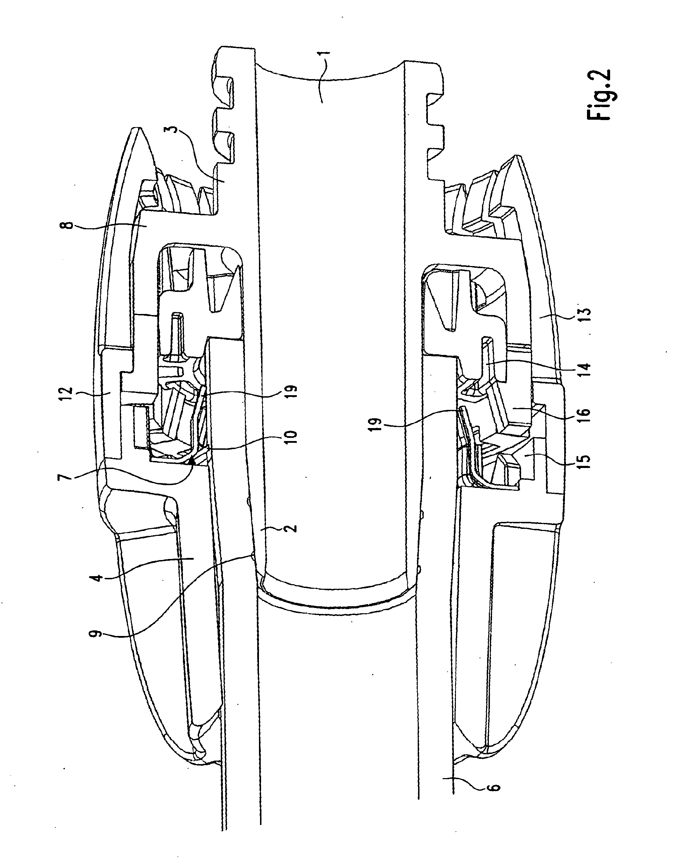

Der Steckfitting umfasst zunächst einen Grundkörper 3, welcher mit einer Durchgangsausnehmung 1 versehen ist. An dem Grundkörper 3 ist, wie in den Fig. 1 und 2 gezeigt, ein Rohrstutzen 2 befestigt, welcher mittels zusätzlicher O-Ringe abgedichtet ist.

Das vordere Ende des Rohrstutzens 2 ist konusartig aufgeweitet und weist eine Wendel oder Schraubwendel 9 auf, die das Aufschrauben eines Rohres 6 erleichtert und das Rohr zusätzlich am Abrutschen hindert. Der erfindungsgemäße Steckfitting umfasst weiterhin eine Außenhülse 4, welche bei dem in den Fig. 1 und 2 gezeigten Ausführungsbeispiel mit einer äußeren Riffelung versehen ist. Die Außenhülse 4 ist drehbar an dem Grundkörper 3 gelagert, wobei hierzu ein Zwischenring 12 und ein Lagerungsring 13, als Schnappverbindung ausgeführt, vorgesehen sind.

Zwischen der Außenhülse 4 und dem Rohrstutzen 2 wird somit ein Ringraum 5 gebildet, in welchen das Rohr 6 einschiebbar ist.

Axial angrenzend an das rückwärtige Ende des vorderen Bereichs der Außenhülse 4 ist ein im Einzelnen nicht weiter bezeichneter Zwischenraum geschaffen, in welchem eine ringförmige Rastvorrichtung 7 angeordnet ist, welche eine Vielzahl von Rastzähnen 10 umfasst.

Axial hinter der Rastvorrichtung 7 ist ein Sicherungselement 8 vorgesehen, welches einen Schlitz 14 oder schlitzförmige Ausnehmungen aufweist, in welchem im nicht-montierten Zustand des Rohres 6 die Vorspannzähne 19 der Rastvorrichtung 7 angeordnet und somit die Rastzähne 10 vorgespannt sind. Diesen Zustand zeigt der obere Teil der Fig. 1. Die Rastzähne 10 sind somit radial nach außen vorgespannt, bei einer Freigabe schlagen diese, wie in Fig. 2 vereinfacht gezeigt, radial nach innen und gelangen somit gegen die Oberfläche des Rohrs (siehe montierter Zustand der Fig. 2).

Es versteht sich, dass erfindungsgemäß die Rastzähne und Vorspannelemente der Rastvorrichtung 7 sich alternierend abwechseln, um die beste Vorspannung der Rastzähne zu erhalten. Es genügt erfindungsgemäß auch, wenn lediglich einzelne dieser Rastzähne vorgespannt sind.

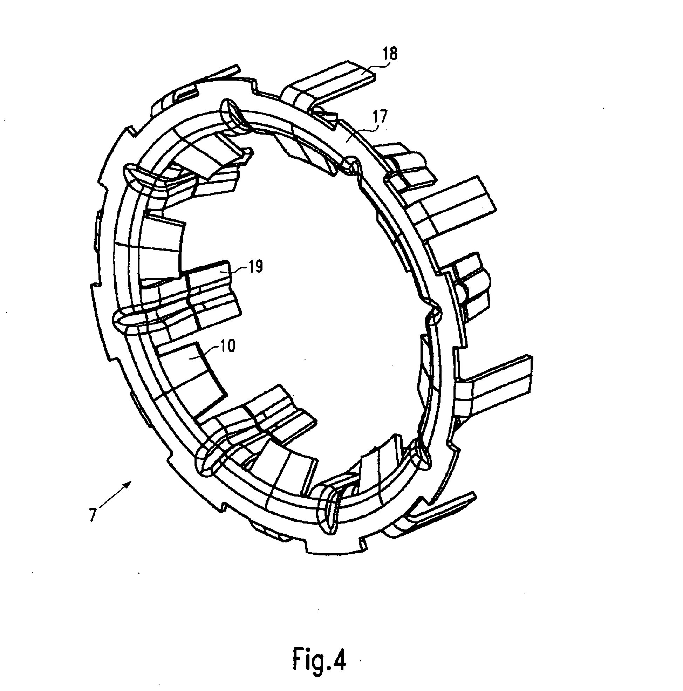

In dem in den Figuren gezeigten Ausführungsbeispiel (siehe insbesondere Fig. 4) ist die Rastvorrichtung 7 so aufgebaut, dass diese einen Trägerring 17 umfasst, der mit Stützfüßen 18 versehen ist, welche einstückig mit diesem ausgebildet sind und sich von seinem Außenumfang aus in einem Winkel von 90° zur Ebene des Trägerrings 17 erstrecken. An der inneren Umlaufkante des Trägerrings 17 sind die bereits erwähnten Rastzähne 10 vorgesehen, welche mit einer scharfen, schneidenartigen Kante versehen sind und sich in die Oberfläche des Rohres 6 einkrallen. Alternierend zu den Rastzähnen 10 ist jeweils ein Vorspannzahn 19 vorgesehen, welcher zum Vorspannen der Rastvorrichtung 7 dient (siehe Fig. 1). Der Vorspannzahn 19 wird radial nach außen gebogen und in den Schlitz 14 des Sicherungselements 8 eingesteckt. Durch diese Verformung werden auch die Rastzähne 10 selbst soweit radial nach außen bewegt, dass ein Einschieben des Rohres 6 möglich ist. Bei einer Freigabe der Vorspannzähne 19 durch Verschieben des Sicherungselements 8 schlagen somit auch die Rastzähne 10 gegen die Oberfläche des Rohres 6 und führen zu der beschriebenen Sicherung und Verkrallung. Die Vorspannzähne 19 erzeugen dabei das beschriebene akustische Klicksignal, wenn das Sicherungselement 8 verschoben wird und die Rastvorrichtung 7 freigibt.

Bei einem Einschieben des Rohrs in den montagebereiten, vorgespannten Zustand des Steckfittings gemäß Fig. 1 wird somit das Rohr zunächst durch Drehen des gesamten Steckfittings auf den Rohrstutzen 2 aufgebracht und aufgeweitet. Bei einer vorgegebenen Aufschiebelänge auf den Rohrstutzen 2 berührt das Rohr 6 das Sicherungselement 8 und verschiebt dieses in axialer Richtung nach hinten. Hierdurch erfolgt eine Freigabe der Vorspannzähne 19 aus dem Schlitz 14. Weiterhin zeigt die Fig. 2 in der unteren Hälfte, dass die Außenhülse 4 innenliegend mit zumindest einer, vorzugsweise mit mehreren symmetrisch angeordneten Nuten 15 versehen ist, in welche eine Backe oder Anlagefläche 16 des Sicherungselementes 8 eingreift, um im nicht-verschobenen Zustand (untere Hälfte der Abbildung der Fig. 1) eine drehfeste Kopplung zwischen der Außenhülse 4 und dem Sicherungselement 8 und damit auch dem Grundkörper 3 zu gewährleisten. Bei der beschriebenen Axialverschiebung des Sicherungselements 8 bei Eindrehen oder Einschieben des Rohres 6 wird somit die Drehsicherung der Außenhülse 4 freigegeben, so dass diese beliebig gedreht werden kann, ohne dass eine Drehung des Grundkörpers 3 und damit des Steckfittings selbst erfolgt. Hierdurch ist ein unbeabsichtigtes Abschrauben des Rohres nicht möglich. Gleichzeitig wird, zusätzlich zu dem auftretenden Klickgeräusch, eine sichere Montage des Rohrs 6 verdeutlicht.

### Bezugszeichenliste

- 1: Durchgangsausnehmung
- 2: Rohrstutzen
- 3: Grundkörper
- 4: Außenhülse
- 5: Ringraum
- 6: Rohr
- 7: Rastvorrichtung
- 8: Sicherungselement
- 9: Wendel oder Schraubwendel
- 10: Rastzahn
- 11 12: Zwischenring
- 13: Lagerungsring
- 14: Schlitz
- 15: Nut
- 16: Backe
- 17: Trägerring
- 18: Stützfuß
- 19: Vorspannzahn

## Patentansprüche

1. Steckfitting mit einem mit einer Durchgangsausnehmung (1) versehenen, einen Rohrstutzen (2) umfassenden Grundkörper (3), sowie mit einer den Rohrstutzen (2) umgebenden Außenhülse (4), welche zu dem Rohrstutzen (2) einen Ringraum (5) zum Einschieben eines Rohrs (6) bildet, wobei in dem Ringraum (5) zumindest eine Rastvorrichtung (7) angeordnet ist, wobei in dem Ringraum (5) axial verschiebbar ein Sicherungselement (8) angeordnet ist, welches im nicht-montierten Zustand die Rastvorrichtung (7) in eine außer Eingriff befindliche Position vorspannt und bei der Montage des Rohrs (6) durch das Rohr (6) zur Freigabe der Rastvorrichtung (7) axial verschiebbar ist, **dadurch gekennzeichnet, dass** die Außenhülse (4) im montierten zustand des Rohrs (6) relativ drehbar an dem Grundkörper (3) gelagert ist und mittels des Sicherungselements (8) im nicht-montierten Zustand drehfest mit dem Grund körper (3) gekoppelt ist.

2. Steckfitting nach Anspruch 1, **dadurch gekennzeichnet, dass** der Rohrstutzen (2) zumindest zum Teil konusförmig ausgebildet ist.

3. Steckfitting nach Anspruch 1 oder 2, **dadurch gekennzeichnet, dass** der Rohrstutzen (2) einen Aufweitkonus und einen Gegenkonus aufweist.

4. Steckfitting nach einem der Ansprüche 1 bis 3, **dadurch gekennzeichnet, dass** der Rohrstutzen (2) zumindest an seinem vorderen Bereich an seiner Außenseite mit einer wendelartig umlaufenden Wulst (9) versehen ist.

5. Steckfitting nach einem der Ansprüche 1 bis 4, **dadurch gekennzeichnet, dass** der Rohrstutzen zumindest an seinem vorderen Bereich mit einer radial umlaufenden Wulst versehen ist.

6. Steckfitting nach einem der Ansprüche 1 bis 4, **dadurch gekennzeichnet, dass** der Rohrstutzen (2) zu dem Rohr (6) selbstdichtend ausgebildet ist.

7. Steckfitting nach einem der Ansprüche 1 bis 6, **dadurch gekennzeichnet, dass** der Rohrstutzen (2) mit Dichtmitteln versehen ist.

8. Steckfitting nach einem der Ansprüche 1 bis 7, **dadurch gekennzeichnet, dass** das Sicherungselement (8) ringförmig ausgebildet ist.

9. Steckfitting nach einem der Ansprüche 1 bis 8, **dadurch gekennzeichnet, dass** die Außenhülse (4) mit zumindest einem Sichtfenster versehen ist.

10. Steckfitting nach einem der Ansprüche 1 bis 9, **dadurch gekennzeichnet, dass** die Rastvorrichtung (7) ringförmig ausgebildet ist und mehrere Rastzähne (10) aufweist.

11. Steckfitting nach einem der Ansprüche 1 bis 10, **dadurch gekennzeichnet, dass** die Rastvorrichtung (7) bei Übergang von der außer Eingriff befindlichen Position in die Freigabeposition ein akustisches Signal erzeugt.

12. Steckfitting nach einem der Ansprüche 1 bis 11, **dadurch gekennzeichnet, dass** die Rastvorrichtung (7) bei Übergang von der außer Eingriff befindlichen Position in die Freigabeposition durch eine Vorspannkraft schlagartig gegen die Oberfläche des Rohrs (6) bewegt wird.

## Claims

1. A plug-in connector comprising a base body (3) provided with an opening recess (1) and including a pipe socket (2) as well as an outer sleeve (4) surrounding the pipe socket (2), which sleeve forms an annular space (5) toward the pipe socket (2) for inserting a pipe (6), wherein at least one locking device (7) is arranged within the annular space (5), wherein a securing member (8) is arranged in the annular space (5) to be axially displaceable, which member biases the locking device (7) into a disengaged position when being in a non-assembled state and is axially displaceable by the pipe (6) upon assembly of the pipe (6) for releasing the locking device (7), **characterized in that** the outer sleeve (4), upon an assembled state of the pipe (6), is supported at the base body (3) to be relatively rotatable and, in a non-assembled state, is coupled to the base body (3) by means of the securing member (8) in a non-rotational manner.

2. The plug-in connector of claim 1, **characterized in that** the pipe socket (2) is formed at least partially as a cone.

3. The plug-in connector of claim 1 or 2, **characterized in that** the pipe socket (2) comprises an expansion cone and a counter cone.

4. The plug-in connector of one of claims 1 to 3, **characterized in that** the pipe socket (2) is provided with a helical circumferential ridge (9), at least at the front portion at the outside thereof.

5. The plug-in connector of one of claims 1 to 4, **characterized in that** the pipe socket is provided with a radial circumferential ridge at least at the front portion thereof.

6. The plug-in connector of one of claims 1 to 4, **characterized in that** the pipe socket (2) is formed in a self-sealing manner with respect to the pipe (6).

7. The plug-in connector of one of claims 1 to 6, **characterized in that** the pipe socket (2) is provided with sealing means.

8. The plug-in connector of one of claims 1 to 7, **characterized in that** the securing member (8) is formed in an annular shape.

9. The plug-in connector of one of claims 1 to 8, **characterized in that** the outer sleeve (4) is provided with at least one inspection window.

10. The plug-in connector of one of claims 1 to 9, **characterized in that** the locking device (7) is formed in an annular shape and comprises a plurality of locking teeth (10).

11. The plug-in connector of one of claims 1 to 10, **characterized in that** the locking device (7) generates an acoustic signal upon transition from the disengaged position into the releasing position.

12. The plug-in connector of one of claims 1 to 11, **characterized in that** the locking device (7), upon transition from the disengaged position into the releasing position, is abruptly moved against the surface of the pipe (6) due to a biasing force.

## Revendications

1. Connecteur enfichable avec un corps de base (3) comportant une tubulure (2), pourvu d'un évidement continu (1), ainsi qu'avec une douille extérieure (4) entourant la tubulure (2), qui forme par rapport à la tubulure (2) un espace annulaire (5) pour l'insertion d'un tube (6), sachant qu'au moins un dispositif d'encliquetage (7) est disposé dans l'espace annulaire (5), sachant qu'un élément de blocage (8) est disposé de manière mobile dans le sens axial dans l'espace annulaire (5), lequel élément de blocage précontraint à l'état non monté le dispositif d'encliquetage (7) dans une position hors engagement et peut être déplacé dans le sens axial lors du montage du tube (6) par le tube (6) pour la libération du dispositif d'encliquetage (7), **caractérisé en ce que** la douille extérieure (4) est logée de manière relativement rotative à l'état monté du tube (6) sur le corps de base (3) et est couplée à l'aide de l'élément de blocage (8) à l'état non monté de manière solidaire en rotation au corps de base (3).

2. Connecteur enfichable selon la revendication 1, **caractérisé en ce que** la tubulure (2) est réalisée au moins en partie en forme de cône.

3. Connecteur enfichable selon la revendication 1 ou 2, **caractérisé en ce que** la tubulure (2) présente un cône d'élargissement et un cône antagoniste.

4. Connecteur enfichable selon l'une quelconque des revendications 1 à 3, **caractérisé en ce que** la tubulure (2) est pourvue au moins sur sa zone avant sur son côté extérieur, d'un bourrelet (9) tournant en spirale.

5. Connecteur enfichable selon l'une quelconque des revendications 1 à 4, **caractérisé en ce que** la tubulure est pourvue au moins sur sa zone avant d'un bourrelet tournant dans le sens radial.

6. Connecteur enfichable selon l'une quelconque des revendications 1 à 4, **caractérisé en ce que** la tubulure (2) est réalisée de manière autoétanche par rapport au tube (6).

7. Connecteur enfichable selon l'une quelconque des revendications 1 à 6, **caractérisé en ce que** la tubulure (2) est pourvue de moyens étanches.

8. Connecteur enfichable selon l'une quelconque des revendications 1 à 7, **caractérisé en ce que** l'élément de blocage (8) est réalisé en forme d'anneau.

9. Connecteur enfichable selon l'une quelconque des revendications 1 à 8, **caractérisé en ce que** la douille extérieure (4) est pourvue d'au moins un regard.

10. Connecteur enfichable selon l'une quelconque des revendications 1 à 9, **caractérisé en ce que** le dispositif d'encliquetage (7) est réalisé en forme d'anneau et présente plusieurs dents d'encliquetage (10).

11. Connecteur enfichable selon l'une quelconque des revendications 1 à 10, **caractérisé en ce que** le dispositif d'encliquetage (7) génère un signal acoustique lors du passage de la position hors engagement à la position de libération.

12. Connecteur enfichable selon l'une quelconque des revendications 1 à 11, **caractérisé en ce que** le dispositif d'encliquetage (7) est brusquement déplacé contre la surface du tube (6) lors du passage de la position hors engagement à la position de libération par une force de précontrainte.
